# EUROPEAN PATENT APPLICATION

(11) **EP 1 967 717 A1**
(43) Date of publication of application: **10.09.2008**
(21) Application number: 07004686.7
(22) Date of filing: 07.03.2007
(51) Int. Cl.: F02C 9/18, F02C 6/08, F02C 7/18

(54) **Gas turbine with a bypass conduit system**

(71) Applicant: SIEMENS AKTIENGESELLSCHAFT, 80333 München (DE)
(72) Inventor: Lam, Kam-Kei, Dr., LN4 2UN Bracebridge Heath (GB); Noden, Richard, TS8 0BB Maltby, Cleveland (GB); Syed, Khawar, Dr., LN10 6SP Woodhall Spa (GB)

(57) **Abstract**

A gas turbine (2) comprises a compressor (4), a combustor (6) with air passages, a turbine (8,9) and a bypass conduit system (1) with at least one inlet conduit (16,18) which is connected to the compressor (4) and/or to air passages of the combustor (6) and with at least one outlet conduit (24,26) which is connected to the at least one inlet conduit (16,18) and the turbine (8,9) . Controllable valves (28,30) are present in the conduit system. Also, a method for controlling emissions of nitrogen oxides at load reduction by controlling the flame temperature is provided. For this purpose an additional air flow from the component (4) and/or from air passages of the combustor (6) is bypassed directly into the turbine (8,9).

## Description

### Background of the invention

The invention relates to a gas turbine with a bypass conduit system.

Gas turbines substantially comprise an inlet, a compressor, a combustor, a turbine and an exhaust. Air from the compressor is directed into the combustion chamber. In the combustion chamber there is a burner in which the compressed air is mixed with fuel and burnt to form a hot pressurized combustion gas. The pressurized gas enters the turbine and drives the rotor while expanding and cooling. The rotor is connected to directly or via a gear box to a generator to generate electricity or to another device, e.g. a pump or a compressor. After passing the turbine the expanded and cooled gas is discharged through the exhaust.

The most common method used in stationary gas turbines to control the emissions of Nitrogen Oxides (NOₓ) from gas turbines is the use of lean premix combustion systems. This means fuel is mixed with a greater than stochiometric oxidant quantity before the mixture is burnt. Typically these systems have a narrow operating range over which the low emissions are achieved. If the flame temperature falls, as happens when the load is reduced, then the emissions of Carbon Monoxide (CO) can increase rapidly, as can emissions of Nitrogen Oxides (NOₓ).

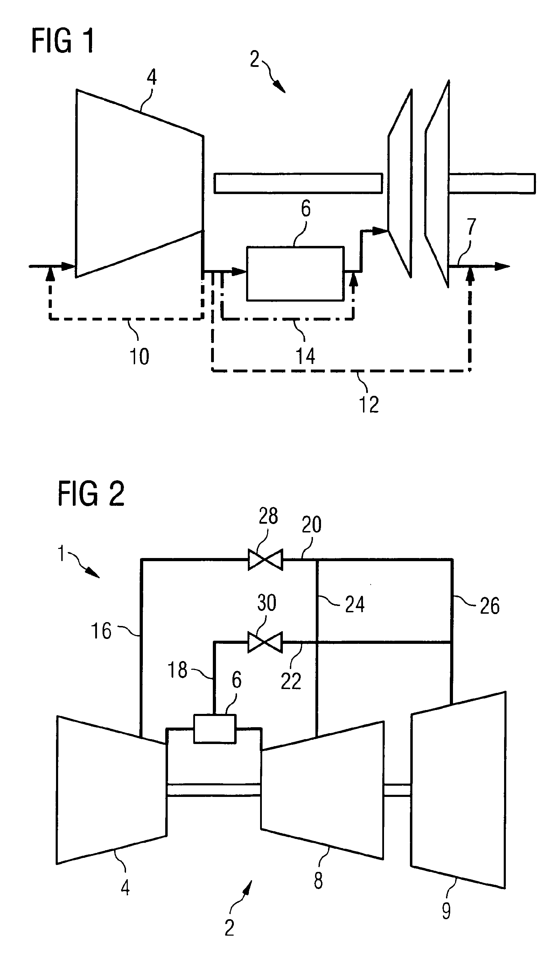

Various methods are employed to maintain the flame temperature within the optimum operating window as the load is reduced. The most common method is to reduce the airflow to the combustion system, either by reducing the airflow delivered by the compressor, by the use of variable stator vanes, or by extracting air upstream of the combustion system (figure 1).

The extracted air may be used in different ways:
a. The air is dumped in to the exhaust. This method is simple but reduces the efficiency of the engine as the energy used for compressing the air is lost.
b. The air is dumped in the intake of the engine. Again this method is simple but energy is lost, however the losses are, in many cases, not as great as when dumping the air into the exhaust as the air retains some of the heat it gains during compression.
c. The air is by-passed around the combustion system and re-injected into the engine upstream of the turbine, like it is, e.g. described in EP 1 074 792 B1. This method minimises the loss in efficiency but in practise it is difficult to achieve the required lives of the sheet metal components and it is difficult to control the temperature profile of the hot gases entering the turbine.

Figure 1 schematically shows a gas turbine 2 with different air extraction piping systems 10, 12 and 14 according to the state of the art. The first alternative shows a bypass 12 that is connected downstream of the compressor 4 to take compressed air and direct it to the exhaust of the gas turbine, as described above under a. In the second alternative, 10, as described above under b, air is downstream of the compressor 4 and reintroduced to the intake of the compressor. In the third alternative, as described above under c, compressed air is extracted downstream of the compressor 4 by a bypass 14 and mixed with the hot gas exiting the combustor 6 upstream of the turbine.

### Objective of the invention

The objective of the invention is to provide an advantageous gas turbine. Another objective is to provide an improved method for controlling emissions.

### Solution according to the invention

These objectives are solved by a gas turbine with the features of claim 1 and by a method for controlling emissions according to claim 9. The depending claims define further developments of the invention.

An inventive gas turbine comprises a compressor, a combustor with air passages, a turbine and a bypass conduit system. The bypass conduit system comprises at least one inlet conduit which is connected to the compressor and/or to air passages of the combustor and at least one outlet conduit which is connected to the at least one inlet conduit and the turbine. It further comprises controllable valves that are present in the conduit system.

With the inventive bypass conduit system the loss in engine efficiency at low loads can be reduced compared to a bypass to the compressor inlet, to a point upstream of the turbine or to the exhaust as known from the state of the art. Bypassing compressor air or air taken from an air passage of the combustor to the turbine can be used to increase combustor operating temperature and thus allow controlling the emissions of nitrogen oxides. The bypass therefore allows a relatively easy control of the temperature profile in the turbine. In addition, the air is being re-injected in a structurally strong area of the turbine.

In an advantageous development of the invention the bypass conduit system is located outside the combustion system. This prevents the airflow from additional heating.

The at least one outlet conduit can be connected to at least one stage of the turbine. The bypassed compressor discharge air, which is not participating in combustion, carries a large quantity of thermal energy and can be directed into the turbine and combined with the combusted hot gas flow in the turbine cascades for recovery.

The gas turbine can comprise stator vanes with at least one internal passage and openings in the stator vane walls. At least one internal air passage is then connected to the outlet conduit. The compressed air can enter the gas flow in the turbine through the internal passages and the openings in the stator vanes.

Each stator vane can comprise at least a first internal passage and a second internal passage with the first internal passage having openings in an upstream end of the stator vane and with the second internal passage having openings in a downstream end of the stator vane. The second internal passage is connected to the outlet conduit. The first internal passage can be used for delivering cooling air to the hot upstream end of the vane while the second internal passage can be used for introducing bypassed air into the turbine at the vanes downstream end which experiences lower temperatures than the upstream end and therefore needs less cooling.

In a further advantageous development of the invention the at least one outlet conduit is connected to the at least one second internal passage in at least some of the stator vanes of the first stage of the turbine. The energy of the pressurized and pre-heated air from the compressor contributes to driving the turbine and therefore a higher recovery can be provided compared to the state of the art.

Advantageously, the turbine comprises at least a first turbine stage and a second turbine stage and the bypass conduit system comprises at least a first inlet conduit connected to the compressor, a second inlet conduit connected to the air passage of the combustor, a first outlet conduit connected to the first turbine stage and a second outlet conduit connected to the second turbine stage. In particular, the first inlet conduit may be connected to the first outlet conduit and to the second outlet conduit, and the second inlet conduit may connected to the first outlet conduit and to the second outlet conduit. The control valves are provided in the first inlet conduit and in the second inlet conduit or in the first outlet conduit and in the second outlet conduit. By utilizing these controllable valves an optimum distribution of bypass mass flow at different loads can be set.

The invention further provides a method for controlling emissions of nitrogen oxide from a gas turbine at load reduction by controlling the flame temperature. Here, an additional airflow from the compressor and/or combustor is bypassed directly into the turbine. In this way the airflow to the combustor is reduced. This allows the flame temperature to be maintained within a predetermined operating window. In contrast to the state of the art where the air flow from the compressor is directed into the gas flow upstream of the turbine (see above under c) the bypass according to the invention directs the air flow directly into the gas flow in the turbine, e.g. through the turbine vanes.

For, e.g., a single shaft gas turbine a decent in load commences by closing the variable inlet guide vanes in the compressor and thereby reducing the mass flow. During this phase the temperature in the combustor is kept constant and as a consequence the pressure ratio over the turbine decreases which leads to an increase in turbine exhaust temperature. This continues until the exhaust temperature has reached it maximal allowable value. For lower loads the temperature in the combustor must then be lowered for the power to further decrease down to idle conditions. With a gas turbine equipped with the mentioned conduit system, it is possible to inject bypassed air into the turbine where it has a temperature decreasing effect. This helps to push the point where the combustor temperature has to be decreased further down in load without further increasing the turbine exhaust temperature.

In a twin shaft gas turbine the mass flow control using variable inlet guide vanes is substantially lost. The mass flow passing through the gas turbine is controlled by the speed of the rotor which in turn is determined by the energy (temperature) at the turbine inlet. Due to that there is a combined effect of bled air and reduced rotor speed the relative response to a flow change is stronger compared to a single shaft gas turbine. To minimise the required bleed flow, the air could be injected in the power turbine. This is made in order for the operating range at full combustor temperature to be extended further down in load.

In an advantageous development of the method for controlling emissions, the airflow is directed into the gas flow in the turbine, in particular into the gas flow in the first stage of the turbine, through internal passages of stator vanes and through openings in the downstream ends of the stator vanes. This also provides the advantages described above.

Further features, characteristics and advantages of the invention become clear from the following description of the embodiments in conjunction with the accompanying drawings.

### Brief description of the drawings

Figure 1 shows a gas turbine with various bypass piping systems according to the state of the art.
Figure 2 shows a gas turbine with a bypass conduit system according to the invention.
Figure 3 shows a stator vane with internal passages and openings.

### Detailed description of the embodiment

Figure 2 shows an inventive gas turbine with a bypass conduit system 1. The gas turbine 2 comprises a compressor 4, a combustor 6, a compressor turbine 8 and a power turbine 9. The bypass conduit system 1 comprises conduits which can be implemented as pipes, in particular a first inlet pipe 16, a second inlet pipe 18, a first main outlet pipe 20, a second main outlet pipe 22, a first outlet pipe 24, a second outlet pipe 26. A first valve 28 and a second valve 30 are also provided. The first outlet pipe 24 and the second outlet pipe 26 are branch conduits of the main outlet pipe 20.

The components of the gas turbine 2 are arranged in series. The first component is the compressor 4 which takes in ambient air. The air is compressed in several stages of the compressor 4 and directed to the combustion chamber 6 for combustion. The pressurized air is mixed with fuel and burnt to establish a flame in the combustion chamber 6. The hot and pressurized burnt gas is directed into the turbine stages 8, 9 where it expands and cools. It drives the turbine 8, 9 and thus the generator (not shown) which is coupled to the power turbine 9 for producing electrical energy. The compressor turbine 8 is used for driving the compressor. After passing the turbine 8, 9 the gas is directed into the exhaust 7 to be reused for heat exchanger processes.

The bypass conduit system 1 comprises multiple pipes. The first inlet pipe 16 is connected to the compressor 4, and first controllable valve 28 is located in the first inlet pipe 16. The first main outlet pipe 20 is connected to the first inlet pipe 16 and branches into the first outlet pipe 24 that leads to the compressor turbine 8 and into the second outlet pipe 26 which is connected to the power turbine 9.

A similar arrangement is shown for a second set of pipes. The second inlet pipe 18 is connected to the air passages of the combustor 6 a second controllable valve 30 is located in the second inlet pipe 18. The second main outlet pipe 22 is connected with its upstream end to the second inlet pipe 18 and with its downstream end to outlet pipes 24 and 26. The first set of pipes and the second set of pipes can be used together or alternatively by suitably controlling the controllable valves 28, 30 in the first and second inlet pipes 16, 18.

In operation, compressed air is directed through the first inlet pipe 16. The mass flow of the air in the first inlet pipe 16 can be adjusted by the first valve 28. After passing the first valve 28 the airflow continues through the first main outlet pipe 20. From this pipe the airflow can be divided into two partial airflows by a divider (not shown) which connects two pipes 24, 26 of equal or different diameters to one single pipe 20. The divider can be implemented as a two-way valve, in particular as a controllable. Thus, the airflow coming from the first main outlet pipe 20 can be divided and flows through the first outlet pipe 24 to the compressor turbine 8 and/or through the second outlet pipe 26 to the power turbine 9. The outlet pipes 24 and 26 can be used in parallel for two partial airflows or separately for one single airflow. With a controllable divider, the distribution of mass flow through the first outlet pipe 24 and the second outlet pipe 26 can be adjusted.

Additionally or alternatively to the first inlet pipe 16, a second inlet pipe 18 can be used. The second inlet pipe 18 takes out air from the air passages in the combustor 6 and directs it to the second valve 30. After passing the second valve 30 the airflow is directed into the second main outlet pipe 22. The airflow in the second main outlet pipe 22 can be divided into two partial airflows flowing through the first outlet pipe 24 and/or the second outlet pipe 26. To divide the air flow a divider, which may be a controllable divider, is employed. The divider connects the first and second outlet pipe 24 and 26, which can have different diameters, to the second main outlet pipe 22. The divider can be implemented as a two-way valve. By means of the two-way valve the airflow from the first outlet pipe 24 is directed to the compressor turbine 8 and/or the airflow from the second outlet pipe 26 is directed to the power turbine 9.

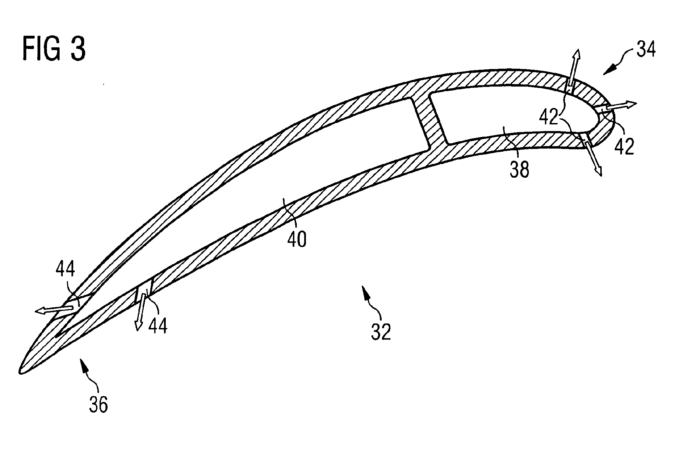

The first outlet pipe 24 is connected to internal passages (see Figure 3) in the stator vanes of the first stage of the compressor turbine 8. The second outlet pipe 26 is connected to internal passages (see Figure 3) in the stator vanes of the first stage of the power turbine 9. Alternatively or additionally, the first and second outlet pipes 24, 26 can be connected to internal passages in stator vanes of other stages of the turbine(s). In the first stage of a turbine, though, the hot pressurised gas has the highest kinetic energy. Therefore it is advantageous to introduce the pressurised air flow(s) from the compressor into the first stage(s) of the turbine(s) to further increase the energy of the gas and thus the torque acting on the rotor.

Figure 3 shows a cross-section of a turbine stator vane 32. The stator vane 32 comprises an upstream end 34, a downstream end 36, a first internal passage 38, a second internal passage 40, first openings 42 and second openings 44.

The first internal passage 38 is located such as to adjoin the upstream end 34 of the vane 32 while the second internal passage 40 is located such as to adjoin the downstream end 36 of the stator vanes 32. The first openings 42 are located at the vane's upstream end 34 and connect the first internal passage 38 to the gas flow around the stator vane's 32 upstream end. Likewise, the second openings 44 are located at the vane's downstream end 36 and connect the second internal passage 40 to the gas flow around the stator vane's 32 downstream end 36.

In operation cooling air flows through the first internal passage 38 and passes the first openings 42 to enter the gas flow at the upstream end of the stator vane 32, thereby forming a cooling film around the hot upstream end 34 of the vane.

The downstream end 36 of the vane 32 is cooler than its upstream end 34. Therefore, the second internal passage 40 and the second openings 44 can be used for introducing bypassed air from the compressor 4 and/or from an air passage of the combustor 6 into the flow of hot pressurised gas entering the turbine.

## Claims

1. A gas turbine (2) comprising a compressor (4), a combustor (6) with air passages, a turbine (8, 9) and a bypass conduit system (1) with at least one inlet conduit (16, 18) which is connected to the compressor (4) and/or to air passages of the combustor (6) and with at least one outlet conduit (24, 26) which is connected to the at least one inlet conduit (16, 18) and the turbine (8, 9),
**characterised in**
**that** controllable valves (28, 30) are present in the conduit system.

2. A gas turbine (2) according to claim 1,
**characterised in**
**that** the bypass conduit system (1) is located outside the combustion system (6).

3. A gas turbine (2) according to claim 1 or 2,
**characterised in**
**that** the at least one outlet conduit (24, 26) is connected to at least one stage of the turbine (8, 9).

4. A gas turbine (2) according to any of the preceding claims,
**characterised in**
**that** the turbine (8, 9) comprises stator vanes (32) with at least one internal passage (38, 40) and openings (42, 44) in the stator vane walls and in that the at least one internal passage (38, 40) is connected to the outlet conduit (24, 26).

5. A gas turbine (2) according to any of the preceding claims,
**characterised in**
**that** a stator vane (32) comprises at least two internal passages, with a first internal passage (38) having openings (42) in an upstream end (34) of the stator vane (32) and with a second internal passage (40) having openings (44) in a downstream end (36) of the stator vane (32), the second internal passage (40) being connected to the outlet conduit(24, 26).

6. A gas turbine (2) according to claim 5,
**characterised in**
**that** the at least one outlet conduit (24, 26) is connected to the second internal passage (40) in at least some of the stator vanes (32) of the first stage of the turbine (8, 9).

7. A gas turbine (2) according to any of the preceding claims,
**characterised in**
**that** the turbine comprises at least a first turbine stage (8) and a second turbine stage (9);
**that** the bypass conduit system (1) comprises at least a first inlet conduit (16) connected to the compressor (4), a second inlet conduit (18) connected to the air passage of the combustor (6), a first outlet conduit (24) connected to the first turbine stage (8) and a second outlet conduit (26) connected to the second turbine stage (9); and
in that the control valves (28, 30) are provided in the first inlet conduit (16) and in the second inlet conduit (18) or in the first outlet conduit (24) and in the second outlet conduit (26).

8. A gas turbine (2) according to claim 7,
**characterised in**
**that** the first inlet conduit (16) is connected to the first outlet conduit (24) and to the second outlet conduit (26); and the second inlet conduit (18) is connected to the first outlet conduit (24) and to the second outlet conduit (26).

9. Method for controlling emissions of nitrogen oxides from a gas turbine (2) at load reduction by controlling the flame temperature,
**characterised in that**
an additional air flow from the compressor (4) and/or from air passages of the combustor (6) is bypassed directly into the turbine (8, 9).

10. Method for controlling emissions according to claim 9,
**characterised in**
**that** the air flow is directed into the gas flow within the turbine (8, 9) through internal passages (40) in the stator vanes (32) and openings (44) in downstream ends (36) of the stator vanes (32).

11. Method for controlling emissions according to claim 10,
**characterised in**
the air flow is directed into the gas flow within the turbine (8, 9) through the first stage of stator vanes (32).
